# EUROPÄISCHE PATENTANMELDUNG

(11) **EP 2 080 647 A2**
(43) Veröffentlichungstag der Anmeldung: **22.07.2009**
(21) Anmeldenummer: 08018454.2
(22) Anmeldetag: 22.10.2008
(51) Int. Cl.: B60F 1/04, B61C 9/46

(54) **Schienenfahreinrichtung**

(30) Priorität: 17.01.2008 DE 102008004981; 19.06.2008 DE 102008029206
(71) Anmelder: SBZ Schörling-Brock Zweiwegetechnik GmbH, 30989 Gehrden (DE)
(72) Erfinder: Peters, Manfred, 30880 Laatzen (DE); Struß, Carlo, 30974 Wennigsen (DE)
(74) Vertreter: Körner, Andreas

(57) **Zusammenfassung**

Die Erfindung betrifft eine Schienenfahreinrichtung mit Schienenlaufrädern (5) für ein Fahrzeug, vorzugsweise für ein Zweiwegefahrzeug, mit einem gegebenenfalls anhebbaren und absenkbaren für einen Betrieb auf Schienen (8) geeigneten Fahrwerk, wobei der Antrieb des Fahrwerks eine zentralen Elektroenergieversorgungseinheit, einer elektronische Steuerung und zumindest einen Elektromotor (1) für das Fahrwerk umfasst. Erfindungsgemäß ist der Elektromotor (1) innerhalb des Achsrohres (2) einer Fahrwerksachse (7), diese antreibend, angeordnet.

## Beschreibung

Die Erfindung betrifft eine Schienenfahreinrichtung mit Schienenlaufrädern für ein Fahrzeug, vorzugsweise für ein Zweiwegefahrzeug, nach dem Oberbegriff des Anspruchs 1.

Zweiwegefahrzeuge, die auch als Mehrwegefahrzeuge bezeichnet werden, sind Fahrzeuge, die sowohl auf der Straße, als auch auf Gleisen fahren können.

Beim Fahren dieser Fahrzeuge auf den Schienen gibt es prinzipiell zwei Möglichkeiten.

Zum einen gibt es Fahrzeuge mit Schienenführungseinrichtungen. Hierbei dienen die für das Befahren der Straße vorhandenen Gummireifen auch der Fahrt auf den Schienen, jedoch sind zur Spurführung zusätzlich separate Führungsrollen vorhanden.

Zum anderen gibt es Fahrzeuge mit Schienenfahreinrichtungen. Hierbei fahren die vorhandenen Reifen nicht auf den Schienen. Stattdessen wird auf gesonderten Schienenlaufrädern gefahren.

Fahrzeuge der vorgenannten Art sind zumeist mit Spezialaufbauten versehene Bau-, Reparatur- und Wartungsfahrzeuge.

Es sind Fahrzeuge bekannt, bei denen über einen Nebenantrieb des Fahrzeugmotors oder eines gesonderten Aufbaumotors, insbesondere einer Verbrennungskraftmaschine, ein hydraulischer Antrieb für die Schienenfahreinrichtung verwendet wird.

Aus der DE 198 44 024 A1 ist ein Zweiwegefahrzeug zur Beförderung von Personen oder Frachten, mit einem zumindest an einer Achse angetriebenen, mit bereiften Rädern versehenem Fahrwerk und einem zweiten anhebbaren und absenkbaren für einen Schienenbetrieb geeigneten Fahrwerk, die getrennt voneinander antreibbar sind, bekannt. Der Antrieb der beiden Fahrwerke besteht aus einer zentralen Elektroenergieversorgungseinheit, einer elektronischen Steuerung und zumindest einem Elektromotor für jedes der beiden Fahrwerke. Die von der zentralen Elektroenergieversorgungseinheit zur Verfügung gestellte Elektroenergie gelangt über die elektronische Steuerung zu zumindest einem Elektromotor, der an jeweils einem der beiden Fahrwerke vorhanden ist und dessen Antrieb realisiert, wobei diese Elektromotoren unabhängig voneinander mit Elektroenergie versorgt und elektronisch gesteuert werden können. Die Elektromotore sind hierbei an der angetriebenen Fahrwerksachse angeordnet.

Es hat sich gezeigt, dass eine solche Antriebslösung sehr anfällig gegen Beschädigung von außen, insbesondere durch Steinschlag, besonderes in rauer Baustellenumgebung ist.

Der Erfindung liegt daher die Aufgabe zugrunde, die Schienenfahreinrichtung eines Fahrzeugs, vorzugsweise eines Zweiwegefahrzeugs, mit zumindest einem Elektromotor derart weiterzuentwickeln, dass der Schutz des Elektromotors vor mechanischer Beschädigung verbessert wird.

Diese Aufgabe wird durch die kennzeichnenden Merkmale des Anspruches 1 in Verbindung mit den Merkmalen des Oberbegriffs gelöst. Weiterbildungen und vorteilhafte Ausgestaltungen der Erfindung ergeben sich aus den Unteransprüchen.

Erfindungsgemäß ist bei einer Schienenfahreinrichtung nach dem Oberbegriff des Anspruchs 1 der zumindest einen Elektromotor innerhalb zumindest eines Achsrohres einer Fahrwerksachse angeordnet und treibt die mit dem Achsrohr verbundenen Schienenlaufräder an.

Dadurch ist der Elektromotor vorteilhaft geschützt angeordnet und kann insbesondere in rauer Umgebung nicht mechanisch beschädigt werden.

Im Vergleich mit einem hydraulischen Antrieb ist die Umwelt außerdem zu keiner Zeit gefährdet. Dies wäre beispielsweise der Fall, wenn es bei dem bekannten hydraulischen Antrieb zu einem Ölunfall kommen würde.

Eine Weiterbildung sieht vor, dass der Elektromotor konstruktiv dem vorhandenen Bauraum innerhalb des Achsrohrs angepasst ist.

Weiterhin ist vorgesehen, dass mindestens zwei Elektromotoren in einer angetriebenen Fahrwerksachse angeordnet sind.

Eine vorteilhafte Ausgestaltung der Erfindung sieht vor, dass der Elektromotor ein Kühlkonzept aufweist, das ebenfalls dem vorhandenen Bauraum innerhalb des Achsrohrs angepasst ist, wobei das Kühlkonzept vorzugsweise ein Kühlwassermantel ist.

Zweckmäßigerweise ist jedem Schienenlaufrad ein Elektromotor zugeordnet.

Vorzugsweise ist jeder Elektromotor einzeln steuerbar, wodurch vorteilhaft ein Einzelradantrieb realisiert werden kann.

Eine Weiterbildung sieht vor, dass die Elektroenergieversorgungseinheit aus einer Verbrennungskraftmaschine und einem Generator besteht.

Weiterhin ist vorgesehen, dass der Elektromotor derart ausgebildet ist, dass eine generatorische Bremsung möglich ist, wobei vorzugsweise geeignete Speichermedien installiert sind, um die generatorisch erzeugte Bremsenergie zur weiteren Verwendung zu speichern. Vorzugsweise ist für ein emissionsfreies Arbeiten wenigsten ein Akku angeschlossen.

Bei einem Antrieb mittels Elektromotor wird die Bewegungsenergie vorteilhaft durch eine generatorische Bremsung zumindest anteilig wieder in elektrische Energie umgewandelt. Dadurch wird die Energiebilanz des Antriebs deutlich verbessert.

Zweckmäßigerweise umfasst der Antrieb hierzu einen Frequenzumrichter, der in der Lage ist, Energie von der Elektroenergieversorgungseinheit zum Elektromotor und beim Bremsen auch zurück in die Elektroenergieversorgungseinheit zu übertragen.

Vorzugsweise umfasst der Antrieb, vorzugsweise innerhalb des Achsrohrs, eine jedem Schienenlaufrad zugeordnete elektronische Gleitschutzregelung.

Durch diese Gleitschutzregelung kann im Gegensatz zum hydraulischen Antrieb dynamischer ein Blockieren der Schienenräder verhindert werden.

Erfindungsgemäß wird Gleitschutzregelung über die für Elektromotoren bekannte Kaskadenregelung für Drehmoment, Drehzahl und Lage realisiert.

Eine vorteilhafte Ausgestaltung der Erfindung sieht vor, dass das Achsrohr teleskopierbar ist.

Schienenfahreinrichtungen von Zweiwegefahrzeugen, die aufgrund ihres Einsatzbereiches flexibel ausgebildet sein sollen, können so erfindungsgemäß auch auf verschiedene Spurweiten eingestellt werden.

Zweckmäßigerweise umfasst der Antrieb ein Getriebe, vorzugsweise mit einer Getriebestufe, pro Elektromotor.

Dadurch wird eine Drehmomenterhöhung am Schienenlaufrad ermöglicht.

Eine Weiterbildung der Erfindung sieht vor, dass der Elektromotor, das Achsrohr, gegebenenfalls ein Getriebe und/oder eine Radlagerung auf derselben Fahrwerksachse, nämlich der Rotationsachse des Schienenlaufrads, angeordnet sind.

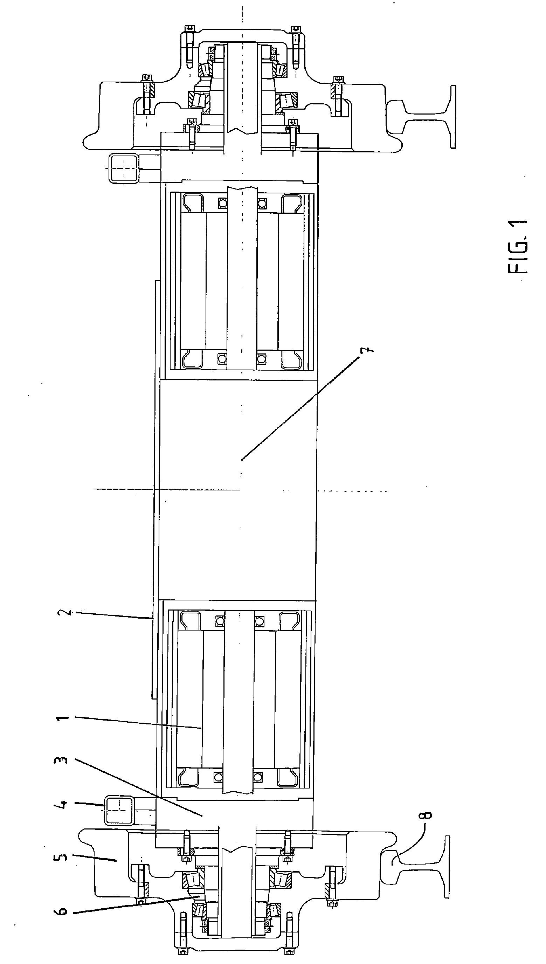

Nachfolgend wird die Erfindung anhand eines Ausführungsbeispiels erläutert, das in der Zeichnung dargestellt ist. In dieser zeigt
- Fig. 1: eine schematische Darstellung einer Fahrwerksachse einer Schienenfahreinrichtung im Längsschnitt.

Zweiwegefahrzeuge werden auf privaten oder öffentlichen Schienennetzen beispielsweise für Gleisarbeiten, Oberleitungsmontagearbeiten oder andere Wartungs-, Reparatur- und Reinigungsarbeiten eingesetzt, und weisen zusätzlich zu ihrer Gummibereifung für herkömmliche Straßen eine Schienenfahreinrichtung mit Schienenlaufrädern 5 auf, welche die Fahrzeuge dazu in die Lage versetzen, sich nach Ausfahren der Schienenlaufräder 5 entlang der Schienen 8 des Schienennetzes fortbewegen zu können. Üblicherweise erfolgt die Umstellung auf den Schienenbetrieb dadurch, dass die Schienenlaufräder 5 über Betätigungseinrichtungen in Form von Hydraulik- oder Pneumatikzylindern ausgefahren werden und das Fahrzeug hierdurch über die Schienen 8 angehoben wird, so dass sich die Straßenantriebsräder in der Luft befinden.

Der in Fig. 1 gezeigte Antrieb des Fahrwerks umfasst eine hier nicht dargestellte Elektroenergieversorgungseinheit, eine hier ebenfalls nicht dargestellte elektronische Steuerung und zwei Elektromotoren 1. Erfindungsgemäß für sind die Elektromotoren 1 innerhalb des Achsrohres 2 einer Fahrwerksachse 7, diese antreibend, angeordnet ist.

Wie deutlich zu erkennen, sind die Elektromotoren 1 konstruktiv dem vorhandenen Bauraum innerhalb des Achsrohrs 2 angepasst, wobei jeden Schienlaufrad 5 ein Elektromotor 1 zugeordnet ist.

Der Antrieb des Fahrwerks bildet eine Einheit aus mindestens einem tragenden oder je nach Ausführung teleskopierbaren Achsrohr 2 und einem elektromotorischen Teil, hier in Form der beiden Elektromotoren 1.

Zwar ist in Fig. 1 nur ein Achsrohr 2 eines Fahrwerks einer Schienenfahreinrichtung dargestellt, der elektromotorische Antrieb der Schienenräder 5 kann aber auch in mehreren tragenden Achsrohren 2 des Fahrwerks der Schienenfahreinrichtung integriert sein. Das tragende oder je nach Ausführung teleskopierbare Achsrohr 2 bleibt hierbei erfindungsgemäß in seinen Dimensionen erhalten.

Sofern, wie hier dargestellt, jedem Schienlaufrad 5 ein Elektromotor 1 zugeordnet ist, kann erfindungsgemäß auch ein Einzelradantrieb der Schienenlaufräder 5 realisiert werden.

Der erfindungsgemäße Antrieb umfasst weiterhin ein am Schienenlaufrad 5 vorgesehenes Getriebe, vorzugsweise mit einer Getriebestufe 3. Dadurch kann eine Drehmomenterhöhung des Schienenlaufrads 5 erreicht werden.

Der Kraftfluss ist vorzugsweise so gestaltet, dass das Fahrzeuggewicht, aufgeteilt je nach Anzahl der Fahrwerksachsen 7 der Schienenfahreinrichtung und Lastverteilung des Fahrzeuges, am Gehäuse des Achsrohres 2 eingeleitet wird, wobei mit 4 die Rahmenanbindung bzw. die Anbindungsstelle am besagten Gehäuse des Achsrohres 2 dargestellt ist. Die Kraft wird dann vorzugsweise über eine Radlagerung 6 auf das Schienenlaufrad 5 geleitet.

Die Drehmomentübertragung vom Elektromotor 1 zum Schienenlaufrad 5 erfolgt wie dargestellt durch die hohlgebohrte Radlagerung 6.

Erfindungsgemäß sind Elektromotor 1, tragendes Achsrohr 2 und Getriebestufe 3 und/oder Radlagerung 8 auf derselben Fahrwerksachse 7, nämlich der Rotationsachse des Schienlaufrades 5, angeordnet.

Dadurch unterscheidet sich der erfindungsgemäße Gegenstand insbesondere von den Schienenfahreinrichtungen, bei denen der Antriebsmotor außermittig über eine Zahnradgetriebestufe zur Drehmomentübertragung an das jeweilige Schienenlaufrad angeschlossen ist.

### Bezugszeichenliste

### (ist Teil der Beschreibung)

- 1: Elektromotor
- 2: Achsrohr
- 3: Getriebe
- 4: Rahmenanbindung
- 5: Schienenlaufrad
- 6: Radlagerung
- 7: Fahrwerksachse
- 8: Schiene

## Patentansprüche

1. Schienenfahreinrichtung mit Schienenlaufrädern (5) für ein Fahrzeug, vorzugsweise für ein Zweiwegefahrzeug, mit einem gegebenenfalls anhebbaren und absenkbaren für einen Betrieb auf Schienen (8) geeigneten Fahrwerk, wobei der Antrieb des Fahrwerks eine zentralen Elektroenergieversorgungseinheit, einer elektronische Steuerung und zumindest einen Elektromotor (1) für das Fahrwerk umfasst, **dadurch gekennzeichnet, dass** der zumindest eine Elektromotor (1) innerhalb zumindest eines Achsrohres (2) einer Fahrwerksachse (7) angeordnet und die mit dem Achsrohr (2) verbundenen Schienenlaufräder (5) antreibt.

2. Schienenfahreinrichtung nach Anspruch 1, **dadurch gekennzeichnet, dass** der Elektromotor (1) konstruktiv dem vorhandenen Bauraum innerhalb des Achsrohrs (2) angepasst ist.

3. Schienenfahreinrichtung nach Anspruch 1 oder 2, **dadurch gekennzeichnet, dass** mindestens zwei Elektromotoren (1) in dem vorhandenen Bauraum innerhalb des Achsrohrs (2) angeordnet sind.

4. Schienenfahreinrichtung nach einem der Ansprüche 1 bis 3, **dadurch gekennzeichnet, dass** der Elektromotor (1) ein Kühlkonzept aufweist, das ebenfalls dem vorhandenen Bauraum innerhalb des Achsrohrs (2) angepasst ist, wobei das Kühlkonzept vorzugsweise ein Kühlwassermantel ist.

5. Schienenfahreinrichtung nach einem der Ansprüche 1 bis 4, **dadurch gekennzeichnet, dass** jedem Schienenlaufrad (5) ein Elektromotor (1) zugeordnet ist.

6. Schienenfahreinrichtung nach einem der Ansprüche 1 bis 5, **dadurch gekennzeichnet, dass** jeder Elektromotor (1) einzeln steuerbar ist.

7. Schienenfahreinrichtung nach einem der Ansprüche 1 bis 6, **dadurch gekennzeichnet, dass** die Elektroenergieversorgungseinheit aus einer Verbrennungskraftmaschine und einem Generator besteht.

8. Schienenfahreinrichtung nach einem der Ansprüche 1 bis 7, **dadurch gekennzeichnet, dass** der Elektromotor (1) derart ausgebildet ist, dass eine generatorische Bremsung möglich ist, wobei vorzugsweise geeignete Speichermedien installiert sind, um die generatorisch erzeugte Bremsenergie zur weiteren Verwendung zu speichern.

9. Schienenfahreinrichtung nach Anspruch 8, **dadurch gekennzeichnet, dass** als Speichermedium wenigstens ein Akku angeschlossen ist.

10. Schienenfahreinrichtung nach einem der Ansprüche 1 bis 9, **dadurch gekennzeichnet, dass** der Antrieb mindestens eine Gleitschutzregelung umfasst.

11. Schienenfahreinrichtung nach einem der Ansprüche 1 bis 10, **dadurch gekennzeichnet, dass** das Achsrohr (2) teleskopierbar ist.

12. Schienenfahreinrichtung nach einem der Ansprüche 1 bis 11, **dadurch gekennzeichnet, dass** der Antrieb ein Getriebe, vorzugsweise mit einer Getriebestufe (3), pro Elektromotor (1) umfasst.

13. Schienenfahreinrichtung nach einem der Ansprüche 1 bis 12, **dadurch gekennzeichnet, dass** der Elektromotor (1), das Achsrohr (2), gegebenenfalls ein Getriebe (3) und/oder eine Radlagerung (6) auf derselben Fahrwerksachse (7), nämlich der Rotationsachse des Schienenlaufrads (5), angeordnet sind.
